# EUROPÄISCHE PATENTANMELDUNG

(11) **EP 1 134 717 A2**
(43) Veröffentlichungstag der Anmeldung: **19.09.2001**
(21) Anmeldenummer: 01250003.9
(22) Anmeldetag: 05.01.2001
(51) Int. Cl.: G08G 1/0968, H04Q 7/32, G06F 13/38

(54) **Verfahren, Informationszentrale und Endgerät für die Übertragung von Daten, wie z.B. Verkehrsinformationen, über ein Mobilfunksystem**

(30) Priorität: 24.02.2000 DE 10009840
(71) Anmelder: MANNESMANN Aktiengesellschaft, 40213 Düsseldorf (DE)
(72) Erfinder: Schröter, Andreas, Dipl.-Ing., 40670 Meerbusch (DE)
(74) Vertreter: Meissner, Peter E., Dipl.-Ing.

(57) **Zusammenfassung**

Ein Endgerät (11) mit zwei Mobilfunkmodulen (6, 10), von welchem zumindest eines für eine schmalbandige Kurznachrichten-Kommunikation und das andere für eine breitbandige Sprach und/oder Datenkommunikation über ein Mobilfunknetzt ausgebildet ist, ermöglicht eine sehr kostengünstige, universelle und effiziente Übertragung von Informationen zwischen einer Informationszentrale (1) und dem Endgerät (11).

## Beschreibung

Die Erfindung betrifft Verfahren und Vorrichtungen zum Übertragen von Informationen zwischen einer Informationszentrale und einem Endgerät.

Herkömmliche Mobilfunkendgeräte (Handys) sind zum Empfang von Verkehrstelematikdienste betreffenden Informationen (Verkehrsinformationen, Verkehrsprognosen, Routen-Hinweise etc.) nur bedingt geeignet.

Deshalb wurden spezielle Zusatzgeräte für Mobilfunktelefone entwickelt, welche Zusatzgeräte die Weiterverarbeitung, optische Darstellung u.s.w. von Verkehrstelematik-bezogenen Informationen erlauben.

Aus der DE 197 02 895 C1 der selben Anmelderin ist ein Endgerät in Form eines Zusatzgerätes für ein herkömmliches Mobilfunktelefon (Handy) bekannt, welches mit dem Mobilfunkendgerät über Kontakte in dessen Halterung kommuniziert; dabei erfolgt die Mobilfunkkommunikation über das (mitnehmbare) Mobilfunkendgerät und die Eingabe, Ausgabe und ggf. Weiterverarbeitung von Verkehrstelematik-bezogenen Informationen seitens des Zusatzgerätes. Dies setzt jedoch voraus, dass das Mobilfunktelefon über eine geeignete Schnittstelle verfügt, über welche dessen Funktionen von außen durch ein Zusatzgerät angesteuert werden können. Bei vielen Mobilfunkendgeräten ist dies jedoch nicht der Fall; soweit jedoch überhaupt eine derartige Schnittstelle vorhanden ist, ist sie bei Mobilfunkendgeräten unterschiedlicher Hersteller verschieden und wird darüber hinaus relativ häufig geändert.
Aufgabe der vorliegenden Erfindung ist die Schaffung eines möglichst universellen und effizienten Endgerätes, Übertragungsverfahrens und einer Informationszentrale hierfür. Die Aufgabe wird durch die unabhänigigen Ansprüche gelöst.

Das erfindungsgemäße Verfahren erlaubt durch zwei voneinander unabhängige Mobilfunkendgeräte im bzw. am Endgerät eine voneinander unabhängige Nutzung der von einem Mobilfunknetz zur Verfügung gestellten Kommunikationskanäle mit unterschiedlichen Preisen und Übertragungskapazitäten, insbesondere Sprachkanälen und Kurznachrichtenkanälen.

Beim erfindungsgemäßen neuen Verfahren und Endgerät können die Sprachkommunikation (über einen Sprachkanal eines Mobilfunknetzes) und die Datenkommunikation (beispielsweise per Kurznachrichten) voneinander unabhängig arbeiten. Damit können beispielsweise einfach strukturierte Daten-Dienste über eine Kurznachrichtenübertragung zum einen Mobilfunkmodul des Endgerätes erfolgen, während eine Sprachkommunikation zum anderen Mobilfunkmodul über einen Sprachkanal eines Mobilfunknetzes erfolgt. Der Aufbau einer Sprachverbindung kann von der (die Verkehrsinformationen aussendenden) Informationszentrale durch Kommunikation mit einem Mobilfunkmodul des Endgerätes über einen Datenkanal (beispielsweise Kurznachrichtenkanal) vorbereitet werden. Die Sprachkommunikation über einen Sprachkanal des Mobilfunknetzes und das andere Mobilfunkmodul des Endgerätes kann beispielsweise eine (zuvor über den Datenkanal genau abgestimmte) Verkehrsinformationen zum aktuellen Endgerätort etc., einen interaktiven Sprachdialogsystemdienst etc. enthalten.

Die Übertragung von Informationen über den Datenkanal zu einem Mobilfunkendgerät kann insbesondere über einen SMS-PtP-Kanal erfolgen.

Ein erfindungsgemäßes Endgerät weist zur Durchführung der Erfindung zwei Mobilfunkendgeräte oder Anschlüsse für Mobilfunkendgeräte auf. In der Informationszentrale, welche in der Regel eine Kommunikation mit dem Mobilfunkendgerät über einen Datenkanal und/oder einen Sprachkanal initiiert, ist zweckmäßig die Kommunikationsadresse (Telefonnummer) des Mobiltelefons bekannt.

Weitere Merkmale und Vorteile der Erfindung ergeben sich aus der nachfolgenden Beschreibung eines Ausführungsbeispiels an Hand der Zeichnung. Dabei zeigt:
- Figur 1: Ein Endgerät,
- Figur 2: eine schmalbandige Datenkommunikation mit einem Mobilfunkmodul und eine breitbandige Sprach-Kommunikation mit dem anderen Mobilfunkmodul und
- Figur 3: eine schmalbandige Datenkommunikation über einen Mobilfunkkanal in Verbindung mit einer breitbandigen Datenkommunikation über einen anderen Mobilfunkkanal.

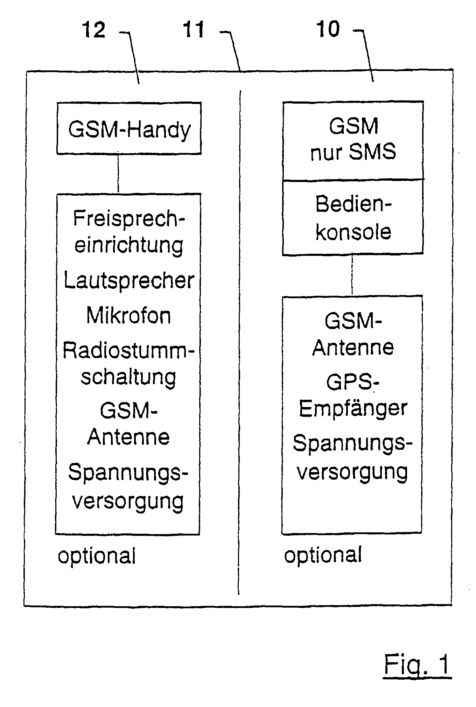

Figur 1 zeigt schematisch ein integriertes Endgerät 11 mit zwei Mobilfunkmodulen 10, 12.

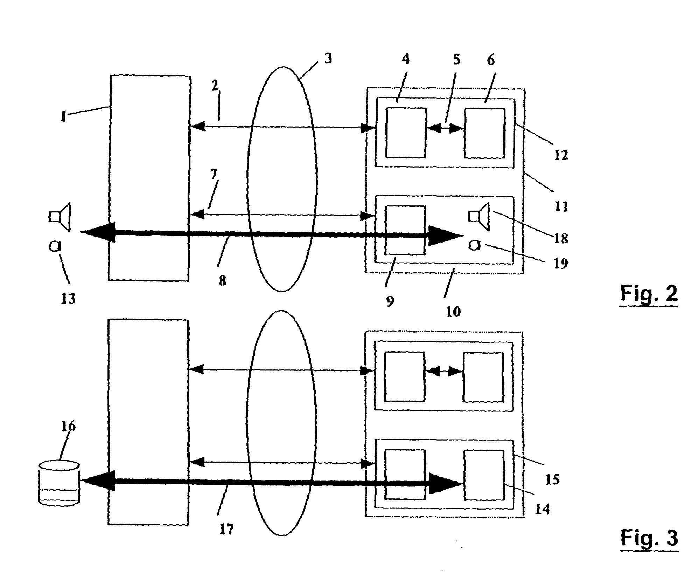

Figur 2 zeigt eine Informationszentrale 1, welche über einen unidirektionalen (SMS-CB) oder bidirektionalen (beispielsweise SMS-PtP) Kommunikationskanal 2 eines Mobilfunknetzes 3 per Mobilfunk mit einem Sender/Empfänger eines ersten Mobilfunkmoduls 4 eines Endgerätes 11 kommuniziert. Die über das Daten-Mobilfunkmodul 4 empfangenen (schmalbandigen) Daten werden weiterverarbeitet, worauf Steuerbefehle und/oder Statusinformationen usw. an eine Anzeigeeinheit 6 des ersten (schmalbandigen) Mobilfunkmoduls 12 zur akustischen und/oder optischen Darstellung übertragen werden. Das erste Mobilfunkmodul 12 kann im Endgerät 11 integriert ausgebildet oder über eine Schnittstelle mit diesem verbunden sein. Das Mobilfunkmodul 12 kann ein auch zur Sprachübertragung geeignetes Mobilfunkmodul sein; hier ist es ein lediglich zur schmalbandigen Datenkommunikation geeignetes Mobilfunkmodul, welches z.B. nur zum SMS-CB-Empfang (ohne Einwahl in ein Mobilfunknetz) und/oder zur bidirektionalen (SMS-PtP) Kurznachrichtenübertragung ausgebildet ist. Das zweite Mobilfunkmodul 10 in Figur 2 ist ein herkömmliches Mobilfunktelefon, welches auch zur Sprachkommunikation ausgebildet ist und entweder im Endgerät 11 enthalten oder über eine Schnittstelle mit diesem verbunden bzw. verbindbar ist.

Während über den schmalbandigen Datenkanal 2 zwischen der Informationszentrale 1 und dem Mobilfunkmodul 12 nur schmalbandige Datenübertragung erfolgt, wird über den Mobilfunkkanal 8 (hier ein Sprachkanal) zwischen der Zentrale 1 und dem zweiten Mobilfunkmodul 10 des Endgerätes 11 eine breitbandige (unidirektionale oder bidirektionale) Sprachübertragung ausgeführt. Beispielsweise können über den schmalbandigen Mobilfunkkanal 2 Positionen, Routenanfragen etc. des Endgerätes 11 an die Zentrale 1 übertragen werden und von der Zentrale 1 über eine (dieser bekannte) Telefonnummer oder sonstigen Kommunikationskennung des zweiten Moduls 10 des Endgerätes 11 dieses (10) angewählt werden, worauf über dessen Mobilfunksende- und Empfangseinrichtung 9 in herkömmlicher Weise Sprache übertragen wird. Die übertragene Sprache kann beispielsweise eine Ansage der Informationszentrale an den Nutzer des Endgerätes 11 sein. Sie kann auch ein bidirektionales Gespräch zwischen dem Nutzer des Endgerätes 11 und einem (durch ein Mikrophon 13 und einen Lautsprecher angedeuteten) Sprachdialogsystem oder mit einem Operator sein.

Wie Figur 3 zeigt, kann anstatt des breitbandigen Sprach-Kanals 8 auch ein breitbandiger Datenkanal 17 eines Mobilfunknetzes zur Übertragung zwischen der Informationszentrale 1 und einem der Mobilfunkmodule eines Endgerätes verwendet werden. Der Aufbau eines derartigen TCH- Datenkanals 17 für GSM- Mobilfunknetze ist beispielsweise in Jacek Biala, Mobilfunk und intelligente Netze, Seite 76 erläutert. Über einen derartigen breitbandigen Datenkanal 17 können insbesondere nicht-Sprach-bezogene Informationen (= keine akustischen digitalisierten Sprachinformationen), also beispielsweise alphanumerische Informationen übertragen werden. Dies können beispielsweise digitale Straßenkarten, Routenhinweise etc. sein.

Beim erfindungsgemäßen Endgerät 11 sind zwei Kommunikationsadressen (Telefonnummer etc.) für die beiden Mobilfunkmodule des Endgerätes 11 vorgesehen, die der Zentrale 1 bekannt sind.

Die Erfindung kann beispielsweise auf Positions-bezogene Informationsdienste, Pannenruf, Notruf und Kombinationen mit anderen Diensten mit und ohne Sprachkommunikation, insbesondere Messaging angewendet werden.

## Patentansprüche

1. Verfahren zum Übertragen von Informationen zwischen einer Informationszentrale (1) und einem Endgerät (11),
insbesondere zwischen einer Verkehrsinformationszentrale (1) und einem Verkehrsinformationsendgerät (11),
**dadurch gekennzeichnet**,
daß die Übertragung von einigen Informationen über einen schmalbandigen Mobilfunkkanal (2) zu einem ersten Mobilfunkmodul (4, 12) seitens des Endgerätes (11) erfolgt,
während die Übertragung weiterer Informationen über einen breitbandigen Mobilfunkkanal (7) zu einem zweiten Mobilfunkmodul (9, 10) seitens des Endgerätes (11) erfolgt.

2. Verfahren nach Anspruch 1,
**dadurch gekennzeichnet,**
**daß** der schmalbandige Übertragungskanal (2) ein Kurznachrichtenkanal, insbesondere Mobilfunkrundspruchkanal und/oder Mobilfunk Point-to-Point-Kanal, ist.

3. Verfahren nach einem der vorhergehenden Ansprüche,
**dadurch gekennzeichnet,**
**daß** der breitbandige Übertragungskanal (8) ein Sprachkanal ist.

4. Verfahren nach einem der vorhergehenden Ansprüche,
**dadurch gekennzeichnet,**
**daß** der breitbandige Datenkanal (17) ein Daten-Verkehrskanal (TCH) ist.

5. Verfahren nach einem der vorhergehenden Ansprüche,
**dadurch gekennzeichnet,**
**daß** die Informationen Verkehrsinformationen und/oder Verkehrsprognosen und/oder Routenempfehlungen und/oder Anfragen nach Verkehrsinformationen oder Verkehrsprognosen oder Routenempfehlungen umfassen.

6. Verfahren nach einem der vorhergehenden Ansprüche,
**dadurch gekennzeichnet,**
**daß** die Informationen Auskünfte oder ein Video oder Hinweise auf mindestens ein Event oder Ereignis umfassen.

7. Verfahren nach einem der vorhergehenden Ansprüche,
**dadurch gekennzeichnet,**
**daß** der Aufbau einer Verbindung über einen breitbandigen Kanal von der Zentrale intiiert wird.

8. Verfahren nach einem der vorhergehenden Ansprüche,
**dadurch gekennzeichnet,**
**daß** ein Aufbau einer Verbindung über einen Kanal durch die Zentrale mit einer dieser bekannten Kommunikationskennung, insbesondere Telefonnummer, eines Mobilfunkmoduls (4; 9; 4, 9) erfolgt.

9. Informationszentrale zur Durchführung des Verfahrens nach einem der vorhergehenden Ansprüche.

10. Informationszentrale, insbesondere nach Anspruch 9, mit einer
Mobilfunkeinrichtung oder einem Zugang zu einer Mobilfunkeinrichtung, welche so ausgebildet ist, dass von ihr an ein ein Endgerät (11) zu sendende Informationen
- teilweise an eine Kommunikationskennung eines ersten Mobilfunkmoduls (4) des Endgerätes (11) gesendet werden und
- teilweise an eine Kommunikationskennung eines zweiten Mobilfunkmoduls (10) des Endgerätes (11) gesendet werden.

11. Informationszentrale nach Anspruch 10,
**dadurch gekennzeichnet**,
daß der Aufbau der breitbandigen Verbindung (8,17)
als Folge einer Anfrage über die schmalbandige Verbindung (2) erfolgt.

12. Informationszentrale nach Anspruch 10 oder 11,
**dadurch gekennzeichnet,**
**daß** die Anfrage über die schmalbandige Verbindung (2) von dem Endgerät (11) initiiert wird.

13. Informationszentrale nach einem der Ansprüche 10 bis12,
**dadurch gekennzeichnet,**
**daß** sie so ausgebildet ist, daß sie den Anruf bei einem Mobilfunkendgerät (11) über einen breitbandigen Datenkanal (17) oder Sprachkanal (8) initiiert.

14. Informationszentrale nach einem der Ansprüche 9 bis13,
**dadurch gekennzeichnet,**
**daß** in der Zentrale (1) eine Kommunikationskennung, insbesondere eine Telefonnummer, eines oder beider der Kommunikationsmodule des Endgerätes (11) gespeichert ist.

15. Endgerät zur Durchführung des Verfahrens nach einem der Ansprüche 1 bis 8.

16. Endgerät (11), insbesondere nach Anspruch 15, zum Senden und Empfangen von Informationen von und zu einer Informationszentrale (1),
- mit einem zur Übertragung von Informationen über einen breitbandigen Mobilfunkkanal (8; 17) eines Mobilfunknetzes geeigneten ersten internen Mobilfunkmodul (12) oder Anschluß für ein externes Mobilfunkmodul, und
- mit einem zumindest oder nur zur Übertragung von Informationen über einen schmalbandigen Mobilfunkdatenkanal (2) geeigneten internen zweiten Mobilfunkmodul (10) oder Anschluß für ein externes zweites Mobilfunkmodul.

17. Endgerät nach Anspruch 16,
**dadurch gekennzeichnet,**
**daß** der schmalbandige Mobilfunkkanal (2) einen Point-to-Point Kurznachrichtenkanal und/oder Cellbroadcast-Datenkanal umfaßt.

18. Endgerät nach einem der Ansprüche 16 oder 17,
**dadurch gekennzeichnet,**
**daß** der breitbandige Kanal ein Mobilfunksprachkanal ist.

19. Endgerät nach einem der Ansprüche 16 bis 18,
**dadurch gekennzeichnet,**
**daß** der breitbandige Kanal ein Mobilfunkverkehrskanal für Daten ist.

20. Endgerät nach einem der Ansprüche 16 bis 19,
**dadurch gekennzeichnet,**
**daß** es eine Ausgabeeinrichtung (14; 18) zur akustischen und/oder optischen Ausgabe von von der Informationszentrale an das Endgerät über den breitbandigen Kanal übermittelten Informationen aufweist.

21. Endgerät nach einem der Ansprüche 16 bis 20,
**dadurch gekennzeichnet,**
**daß** es eine Eingabeeinrichtung (14; 19) zur Eingabe von über den schmalbandigen und/oder breitbandigen Kanal vom Endgerät an die Informationszentrale zu übermittelten Informationen, insbesondere Anfragen, umfaßt.
